Europäisches Patentamt

**European Patent Office**

Office européen des brevets

(19)

(11) Veröffentlichungsnummer: **0 103 929**
**B1**

(12) **EUROPÄISCHE PATENTSCHRIFT**

(45) Veröffentlichungstag der Patentschrift:
07.02.90

(51) Int. Cl.⁵: **G 11 B 7/08**

(21) Anmeldenummer: 83201310.6

(22) Anmeldetag: 13.09.83

(54) Optische Vorrichtung zur Lenkung bzw. Ausrichtung eines Strahlenbündels.

(30) Priorität: 16.09.82 DE 3234288

(43) Veröffentlichungstag der Anmeldung:
28.03.84 Patentblatt 84/13

(45) Bekanntmachung des Hinweises auf die Patenterteilung:
07.02.90 Patentblatt 90/06

(84) Bennante Vertragsstaaten:
DE FR GB

(56) Entgegenhaltungen:
EP-A-0 070 070
FR-A-2 385 174

PATENTS ABSTRACTS OF JAPAN, Band 6, Nr. 152 (P-134) 1030 , 12. August 1982; & JP - A - 57 71 529
PATENTS ABSTRACTS OF JAPAN, Band 6, Nr. 125(P-127) 1003 , 10. Juli 1982; & JP - A - 57 50 333
PATENTS ABSTRACTS OF JAPAN, Band 6, Nr. 145 (P-132) 1023 , 4. August 1982; & JP - A - 57 66 536
PATENTS ABSTRACTS OF JAPAN, Band 6, Nr. 198 (P-147) 1076 , 7. Oktober 1982; & JP - A - 57 108 806
PATENTS ABSTRACTS OF JAPAN, Band 7, Nr. 150 (P-207) 1295 , 30. Juni 1983; & JP - A - 58 60 434
PATENTS ABSTRACTS OF JAPAN, Band 7, Nr. 42 (P-177) 1187 , 19. Februar 1983; & JP - A - 57 191 838
PATENTS ABSTRACTS OF JAPAN, Band 7, Nr. 234 (P-230) 1379 , 18. Oktober 1983; & JP - A - 58 122 506

(73) Patentinhaber: **Philips Patentverwaltung GmbH
Wendenstrasse 35 Postfach 10 51 49
D-2000 Hamburg 1 (DE)**
(84) Bennante Vertragsstaaten: DE

Patentinhaber: **N.V. Philips' Gloeilampenfabrieken
Groenewoudseweg 1
NL-5621 BA Eindhoven (NL)**
(84) Bennante Vertragsstaaten: FR GB

(72) Erfinder: **Honds, Leo
Flandrische Strasse 50
D-5100 Aachen (DE)**
Erfinder: **Meyer, Karl Hanns, Dr.-Ing.
Nersteider Weg 34
D-5100 Aachen (DE)**

(74) Vertreter: **Kupfermann, Fritz-Joachim, Dipl.-Ing.
Philips Patentverwaltung GmbH Wendenstrasse 35
Postfach 10 51 49
D-2000 Hamburg 1 (DE)**

**Beschreibung**

Die Erfindung bezieht sich auf eine optische Vorrichtung zur Lenkung bzw. Ausrichtung eines Strahlenbündels auf Aufzeichnungs- und Wiedergabespuren in einem Informationsträger mit einem Objektiv, dessen räumliche Stellung gegenüber dem Informationsträger ständig korrigierbar ist mittels einer Bewegungsvorrichtung, die aus einem verstellbaren, in einem Magnetfeld reaktionsfähigen Objektivträger und stationären Spulen besteht, die durch elektrische Ansteuerung den Objektivträger im Magnetfeld verstellen, daß der Objektivträger aus einer Hülse besteht, die mit Magnetpolen versehen ist, daß an jedem axialen Hülsenende ein Spulensatz mit jeweils mindestens drei Spulen angeordnet ist und daß die Richtungen der Kräfte an deren Angriffspunkten an der axialen Hülse durch Positionierung der Spulen im äußeren Rückschlußfeld so gewählt werden, daß die Verlängerung der Kraftvektoren nicht durch den Schwerpunkt des Objektivträgers mit Hülse gehen und somit zwei Drehmomente um zwei zur Objektivachse senkrechten Achsen erzeugt werden.

Zum Einzeichnen und Auslesen von sich drehenden Informationsträgerplatten ist es notwendig, den Lichtstrahl ständig genau auf die gewünschte Spur zu richten. Diese genaue Ausrichtung erfolgt mit einer elektrischen Korrekturregelung, die auf den Träger des Objektivs einwirkt, das den gebündelten Lichtstrahl auf die gewünschte Spur leitet.

Es ist aus der NL-Patentanmeldung 8 103 305 eine optische Vorrichtung zum Lenken bzw. Ausrichten eines Lichtstrahls bekannt, bei der der Schreib- bzw. Lesestrahl den Speicherträger zur richtigen Zeit, an der richten Stelle, senkrecht zur Oberfläche trifft. Das Objektiv wird dabei gleichzeitig ständig im richtigen Abstand von der Oberfläche des Speicherträgers gehalten. Dies wird dadurch erreicht, daß der Schreib- bzw. Lesestrahl in drei zueinander senkrechten Achsen linear verschiebbar und um zwei dieser drei Achsen darüber hinaus auch noch verdrehbar ist.

Zur richtigen Positionierung des Objektivs ist es vorgesehen, daß das Objektiv frei beweglich aufgehängt ist und über eine Anzahl von Aktuatoren Kräfte für die Bewegungen in den fünf Achsen aufgebracht werden.

Diese Aktuatoren enthalten Spulen, die Magnetfelder erzeugen, die das Objektiv dann in der richtigen Weise positionieren. Eine der beschriebenen optischen Vorrichtungen enthält insgesamt neun Aktuatoren, die aus fünf Permanentmagneten und neun Spulen bestehen. Die Permanentmagneten aller neun Aktuatoren sind am beweglichen Träger des Objektivs angebracht. Alle Systeme können gleichzeitig aktiviert werden.

Der Aufwand der Anbringung von fünf Dauermagneten an dem Träger des Objektivs in der richtigen Position und die Notwendigkeit von neun Aktuatoren machen die optische Vorrichtung mechanisch und elektrisch aufwendig.

Aus der DE-OS-2 811 111 ist eine Positioniervorrichtung bekannt, bei der ein das Objektiv tragender Tubus mittels einer Membran an einem staitonären Gestell abgestützt ist. Nahe der Membran trägt der Tubus eine Fokussierspule, die mit stationären Fokussiermagneten zusammenwirkt. Am entgegengesetzten Fokusende sind Spulen für Spurfolgung und Zeitfehlerkorrektur vorgesehen, die ihrerseits mit Ständerdauermagneten zusammenwirken. Auch in diesem Fall ist der bauliche Aufwand relativ groß, obwohl das Objektiv nur um zwei senkrecht zueinander stehende Achsen im Bereich der Membran kippen kann.

Aus der JP-A-5 766 536 ist es schließlich bekannt, eine Hülse, die eine optische Einheit trägt, an ihren Enden mit dauermagnetischen Elementen und im Mittelbereich mit einem magnetischen Ring zu versehen. Um den magnetischen Ring erstrecken sich zwei magnetisch in axialer Richtung wirkende Ringspulen, und jedes dauermagnetische Element an den Hülsenenden ist beeinflußbar von einem zugeordneten, nur in radialer Richtung wirkenden Elektromagneten. Bei dieser Anordnung wird eine deutliche Trennung zwischen radialen (x- und y-)Richtungen und axialer (z-)Richtung vorgenommen. Ein besonderes Spulensystem für die axiale (z-)Richtung und viele Teilmagnete für die radialen (x- und y-)Richtungen machen die optische Vorrichtung aufwendig.

Die JP-A-57-71 529 zeigt zur Fokussteuerung eine dauermagnetische Hülse, die mit einer Luftringspule zusammenwirkt.

Der Erfindung liegt die Aufgabe zugrunde, ein möglichst einfaches und wirkungsvolles System zur Bewegung eines Objektivs in drei linear unabhängigen Raumrichtungen, deren eine mit der optischen Achse des Objektivs zusammenfällt, und zur Erzeugung zweier linear unabhängiger Drehmomente in einer Ebene senkrecht zur Objektivachse anzufertigen.

Die gestellte Aufgabe ist erfindungsgemäß dadurch gelöst, daß die Spulen als Luftspulen ausgebildet sind und im äußeren Rückschlußfeldbereich der daueremagnetischen Hülse mit axialer und radialer Feldkomponente derart angeordnet sind, daß jede einzelne Spule für sich eine Kraft mit allen drei Komponenten in x-, y- und z-Richtung auf die Hülse ausübt und wobei die resultierende Kraft aller Spulen durch geeignete Ansteuerung der Spulen nur gewünschte Komponenten enthält.

Von den bisher benutzten Aktuatoren bleiben damit nur noch die Spulen übrig, die mit einem allen gemeinsamen Dauermagnetsystem zusammenwirken. Damit entfällt das getrennte Anbringen von vielen einzelnen Dauermagneten, und die Aktuatoren werden wesentlich vereinfacht. Das einzige Permanentmagnetsystem stellt das bewegliche Teil der Bewegungsvorrichtung dar, in die das Objektiv mechanisch starr eingesetzt ist.

Alle Spulen erzeugen ein Feld mit kombinierter radialer (x- und y-) und axialer (z-)Komponente. Die radialen Komponenten könnten sich dabei aufheben. Den Bewegungsrichtungen der Hülse der Positioniervorrichtung wird ein 3-dimensionales Koordinaten-System x-y-z zugeordnet. Das x-y-z-System ruht fest auf der Positioniervorrichtung. Zur sich drehenden Informationsträgerplatte bestehen folgende Beziehungen:

Die z-Koordinate ist parallel zur Rotationsachse der Informationsträgerplatte, d. h. in z-Richtung wird der Abstand eines Objektivs zum Informationsträger verändert (Fokussierung).

Die x-Koordinate steht senkrecht zur Rotationsachse der Informationsträgerplatte und entspricht der radialen Richtung der Informationsträgerplatte.

Die y-Koordinate steht ebenfalls senkrecht zur Rotationsachse der Informationsträgerplatte und entspricht der tangentialen Richtung der Informationsträgerplatte.

Die drei Translationen und die zwei Rotationen bedingen das Aufbringen von drei Kräften Fx, Fy und Fz in drei Koordinatenrichtungen (x, y, z) und von zwei Drehmomenten Mx und My um zwei der drei Koordinatenachsen (x, y). Dies wird auf einfache Weise dadurch erreicht, daß die Spulen der Aktuatoren im äußeren Rückschlußfeld der dauermagnetischen Hülse angeordnet sind und zwar dort, wo die Feldlinien des Permanentmagnetfeldes solche Richtungen haben, daß die Kraftvektoren der Lorentzkraft die gewünschten Richtungen bekommen.

Für die Erzeugung der drei Kräfte und zwei Drehmomente wird ein System aus mindestens sechs Einzelspulen benutzt. Jede Einzelspule erzeugt einen Kraftvektor, das ganze Spulensystem sechs Kraftvektoren. Die gewünschten drei Kräfte in den Koordinatenachsen und die zwei Drehmomente werden aus den sechs Einzelkräften der sechs Spulen zusammengesetzt. Die sechs Spulen sind dabei in zwei Gruppen zu je drei Stück in radialen Ebenen im Bereich beider Hülsenenden angeordnet. In diesen Bereichen haben die magnetischen Feldlinien die geeigneten Richtungen. Die Spulen sind als fläche Luftspulen ausgeführt. Jede Spule umfaßt einen Bogen von 120 Grad (alle drei Spulen zusammen bedecken den gesamten Umfang).

Nach einer weiteren Ausgestaltung der Erfindung ist vorgesehen, daß je vier Spulen in radialen Ebenen im Bereich der Hülsenenden angeordnet sind. Jede Spule umfaßt einen 90-Grad-Sektor.

In diesem 8-Spulensystem entstehen acht Einzelkräfte, aus denen die drei Kräfte in den Koordinatenachsen und die zwei Drehmomente zusammengesetzt werden.

Eine weitere Ausgestaltung der Erfindung sieht vor, daß die Spulen nicht als fläche Spulen ausgebildet sind, sondern als Formspulen entsprechend dem Verlauf des Permanentmagnetfeldes gebogen sind, d. h. ihre Form ist dem 3-dimensionalen Verlauf des Permanentmagnetfeldes angepaßt in der Weise, daß die Lorentzkraft möglichst groß wird (dazu muß die Spulenrückseite, die natürlich auch eine Kraft macht, in Feldgebiete mit möglichst geringer Feldintensität gelegt werden).

Eine weitere Ausgestaltung der Erfindung sieht vor, daß die permanentmagnetische Hülse einen polygonförmigen Querschnitt hat (z. B. Quadrat) und die zuhörigen Spulen der polygonförmigen Hülse angepaßt sind. Auch hier können die Spulenebenen aus drei oder vier Teilspulen bestehen und als Flachspule oder auch als Formspule ausgeführt werden.

Eine weitere Ausgestaltung der Erfindung sieht vor, daß die runde oder polygonförmige Hülse mit einer inhomogenen Magnetisierung versehen ist. D. h., hierbei liegen die Magnetpole nicht mehr unbedingt auf den Stirnflächen der Hülse, sondern sie können ganz oder teilweise auch an den Mantelflächen liegen. Mit einer inhomogenen Magnetisierung kann u. U. der Verlauf der magnetischen Feldlinien günstig beeinflußt werden.

Eine weitere Ausgestaltung der Erfindung sieht vor, daß die Spulen in einer zylinderförmigen Ebene über der Hülsenmantelfläche angeordnet werden, wobei durch eine geeignete Ausgestaltung der Hülse erreicht wird, daß die Spulenrückseiten in einem Feldgebiet mit möglichst geringer Feldintensität angeordnet sind.

Eine weitere Ausgestaltung der Erfindung sieht vor, daß die Hülse in axialer Richtung aus mehreren Teilen besteht. Eine mögliche Ausführung besteht aus zwei kurzen Magneten, die über ein magnetisch leitendes Zwischenstück miteinander verbunden sind. Eine ebenfalls mögliche Ausführung besitzt ein magnetisch nicht leitfähiges Zwischenstück. Beide Versionen können Vorteile bezüglich der magnetischen Feldverläufe haben.

Bei beiden Versionen sind zwei Varianten der Magnetisierungsrichtung möglich: Die Magnete können gegeneinander oder gleichsinnig magnetisiert angebracht werden. In beiden Fällen haben die Feldlinien der Außenfelder Bereiche, in denen die Feldlinien die gewünschten Richtungen aufweisen.

Bei allen beschriebenen Varianten des Magnetsystems und des Spulensystems ist es ohne weiteres möglich, den magnetischen Flußverlauf durch Polschuhe oder äußere Flußleitstücke zu beeinflussen.

Die Erfindung wird anhand des in der Zeichnung dargestellten Ausführungsbeispiels näher erläutert.

Es zeigen:

| | |
|---|---|
| Fig. 1 | das elektromagnetische Prinzip mit einer axial magnetisierten Dauermagnethülse und einem Stromleiter einer Spule im inhomogenen Rückschlußfeld, |
| Fig. 2a und b | eine Spulenanordnung mit zwei Spulenebenen im Bereich der axialen Hülsenenden und vier Spulen pro Spulenebene, |
| Fig. 3a und b | eine Spulenanordnung mit zwei Spulenebenen im Bereich der axialen Hülsenenden und drei Spulen pro Spulenebene, |
| Fig. 4 | die Anordnung der Spulen und der Dauermagnethülse in einem Spulenkörper, |
| Fig. 5a bis c | einige Beispiele für verschiedene Magnetisierungen der Hülse, |
| Fig. 6a bis h | einige Beispiele für eine Hülse mit verschiedener Magnetisierung, wobei die Hülse aus zwei Magneten und einem Zwischenstück besteht. |

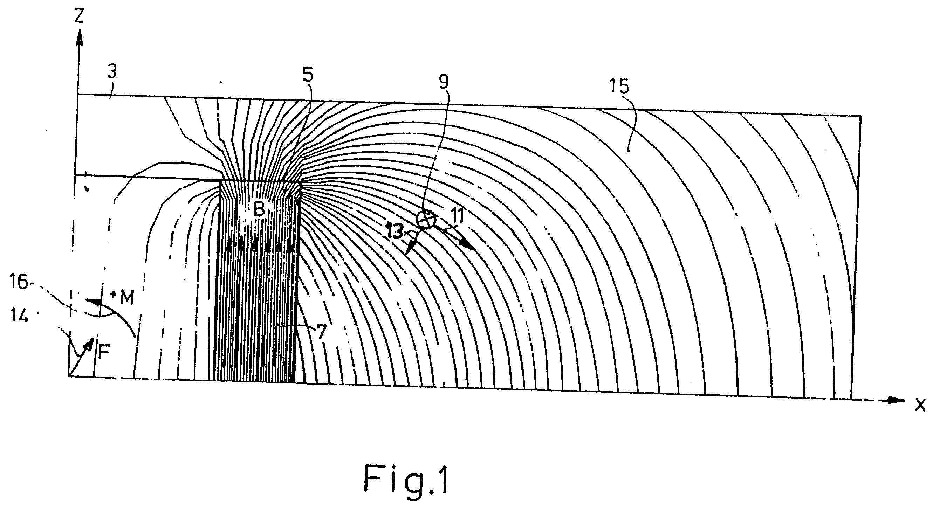

Fig. 1 zeigt im Schnitt die obere rechte Hälfte einer axial magnetisierten Dauermagnethülse 3 mit dem Magnetfeld in der Hülse und dem magnetischen Außenfeld der Hülse. Vom äußeren Magnetfeld ist nur ein Ausschnitt dargestellt. Die obere rechte Ecke ist mit 5 bezeichnet. Die Hülse ist dauermagnetisch ausgebildet und axial magnetisiert in Richtung der Pfeile 7.

Der prinzipielle Zusammenhang zwischen Stromrichtung, Feldlinienrichtung und Kraftrichtung (Lorentzkraft) ist für einen Leiter 9, der als Ersatz für die gesamte Spule zu betrachten ist, eingezeichnet. Tritt ein Strom I im Leiter 9 in die Bildebene ein und ist das Magnetfeld an dieser Stelle in Richtung von Pfeil 11 gerichtet, so hat es damit, wie Fig. 1 zeigt, eine Komponente in axialer und eine Komponente in radialer Richtung. Auf den Leiter wirkt damit eine Lorentzkraft F13 in Richtung von Pfeil 13 mit einer radialen und axialen Komponente ein. Die Richtung dieser Kraft ist senkrecht zur Leiterachse und senkrecht zur Richtung der Flußlinien. Auf die Hülse 3 wirkt eine gleich große Gegenkraft, die die entgegengesetzte Richtung von Pfeil 13 hat.

Der Leiter 9 wird so angeordnet, daß die Gegenkraft nicht durch den Schwerpunkt der Hülse geht. Eine Transformation auf den Schwerpunkt bedeutet das Hinzufügen eines Drehmomentes, d. h. durch den im Beispiel in Fig. 1 gezeigten Stromleiter 9 wird auf die Dauermagnethülse 3 insgesamt eine Kraft 14 und ein Drehmoment 16 ausgeübt. Durch geeignetes Positionieren von Leitern in dem inhomogenen Magnetfeld können daher nahezu beliebig gerichtete Kraftvektoren und Drehmomente erzeugt werden.

Ist es möglich, die gesamten Spulenleiter derart in dem äußeren Rückschlußfeld 15 zu plazieren, dann kann ein optimaler Einfluß auf die Hülse 3 ausgeübt werden. In der Praxis wird dies aber optimal nicht möglich sein. Man wird sich mit Mittelwerten zufrieden geben müssen. Auf jeden Fall ist es aber durch die Anordnung der Spulen im äußeren magnetischen Feld 15 der dauermagnetischen Hülse 3 möglich, durch Ansteuerung von Feldspulen die Hülse 3 im Feld zu verstellen.

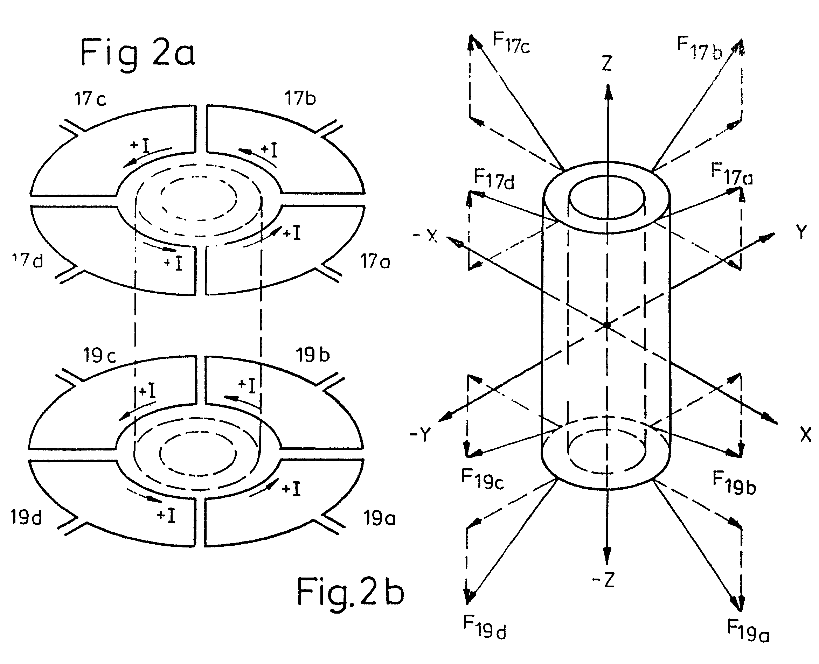

Fig. 2 zeigt nun eine Anordnung mit vier Spulen je Spulensatz. Die Spulen 17a bis 17d und 19a bis 19d befinden sich in parallel zueinander, übereinander angeordneten Radialebenen, die etwa im Bereich der axialen Hülsenenden 21, 23 angeordnet sind. Die Spulen 17 und 19 sind bezogen auf das x-y-z-Koordinatensystem so angeordnet, daß

die Spulenmitte der Spulen 17a und 19a mit der +x-Koordinate,
die Spulenmitte der Spulen 17b und 19b mit der +y-Koordinate,
die Spulenmitte der Spulen 17c und 19c mit der -x-Koordinate,
die Spulenmitte der Spulen 17d und 19d mit der -y-Koordinate
zusammenfallen.

Wie sich aus Fig. 2 ergibt, ergeben sich dabei folgende Feldverteilungen und Steuermöglichkeiten für die Verstellung Hülse 3: Werden die Spulen 17a bis 17d bzw. 19a bis 19d einzeln so von einem Strom durchflossen, daß die Stromrichtung an den Spuleninnenseiten im Gegenuhrzeigersinn verläuft (Fig. 2a; im folgenden als positive Stromrichtung definiert), so enthalten jeweils die auf diese Hülse wirkenden resultierenden Teilkräfte F17a bis F17d sowie F19a bis F19d Komponenten in verschiedenen Richtungen (Fig. 2b und Tabelle 1).

**Tabelle 1**

| | | | |
|---|---|---|---|
| Kraft F17a enthält Komponenten in | +x | | und +z Richtung |
| Kraft F17b enthält Komponenten in | | +y | und +z Richtung |
| Kraft F17c enthält Komponenten in | -x | | und +z Richtung |
| Kraft F17d enthält Komponenten in | | -y | und +z Richtung |
| Kraft F19a enthält Komponenten in | +x | | und -z Richtung |
| Kraft F19b enthält Komponenten in | +x | +y | und -z Richtung |
| Kraft F19c enthält Komponenten in | -x | | und -z Richtung |
| Kraft F19d enthält Komponenten in | | -y | und -z Richtung |

Die gewünschten Gesamtkräfte in x-, y- bzw. z-Richtung werden nun durch Addition geeigneter Spulenteilkräfte gewonnen. Um z. B. eine resultierende Kraft in +z-Richtung zu erhalten, muß in den spulen 17a bis 17d ein Strom in positiver Richtung und in den Spulen 19a bis 19d ein Strom in negativer Richtung fließen, die Addition der Spulenteilkräfte entsprechend der Tabelle 1 ergibt eine resultierende Kraft in +z-Richtung, während die Summe der Teilkräfte in x- bzw. y-Richtung Null ergibt. Für die Kraft in z-Richtung sind also alle acht Spulen aktiv.

Um eine resultierende Kraft in x- bzw. y-Richtung oder eine Drehung um die x- bzw. y-Achse zu erhalten, sind jeweils nur vier Spulen aktiv, wie aus Tabelle 2 zu ersehen ist.

**Tabelle 2**

+I = positive Stromrichtung
-I = negative Stromrichtung

| | Stromrichtung in Spule | | | | | | | |
|---|---|---|---|---|---|---|---|---|
| gewünschte Bewegungsrichtung | 17a | 17b | 17c | 17d | 19a | 19b | 19c | 19d |
| Bewegung in | +I | +I | +I | +I | -I | -I | -I | -I |

4

| +z-Richtung | | | | | | | | |
|---|---|---|---|---|---|---|---|---|
| Bewegung in +x-Richtung | +I | 0 | -I | 0 | +I | 0 | -I | -0 |
| Bewegung in +y-Richtung | 0 | +I | 0 | -I | 0 | +I | 0 | -I |
| Drehung um die x-Richtung im Uhrzeigersinn | 0 | +I | 0 | -I | 0 | -I | 0 | +I |
| Drehung um die y-Richtung im Uhrzeigersinn | -I | 0 | +I | 0 | +I | 0 | -I | 0 |

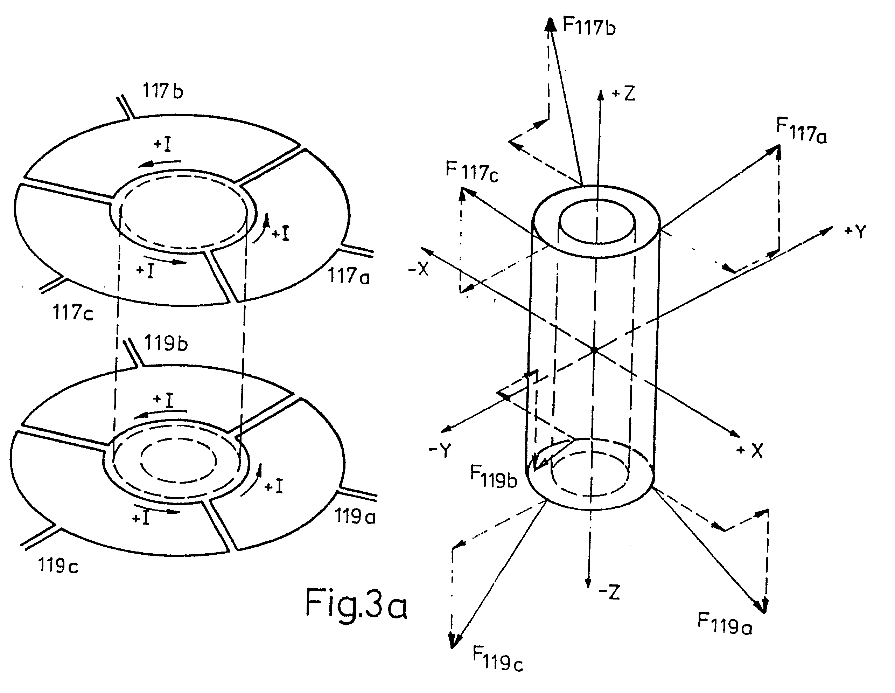

Fig. 3 zeigt nun eine Anordnung mit drei Spulen je Spulensatz. Die Spulen 117a bis 117c und 119a bis 119c befinden sich in parallel zueinander, übereinander angeordneten Radialebenen, die etwa im Bereich der axialen Hülsenenden 21, 23 angeordnet sind. Die Spulen 117 und 119 sind bezogen auf das x-y-z-Koordinatensystem beispielsweise so angeordnet, daß die Spulenmitte der Spulen 117a und 119a um 30 Grad im Gegenuhrzeigersinn zur +x-Koordinate verschoben ist, die Spulenmitte der Spulen 117b und 119b um 60 Grad im Gegenuhrzeigersinn zur +y-Koordinate verschoben ist, die Spulenmitte der Spulen 117c und 119c mit der -y-Koordinate zusammenfallen.

Werden die Spulen 117a bis 117c bzw. 119a bis 119c einzeln so von einem Strom I durchflossen, daß die Stromrichtung an den Spuleninnenseiten im Gegenuhrzeigersinn verläuft (Fig. 3a; im folgenden als positive Stromrichtung definiert), so enthalten jeweils die auf die Hülse wirkenden resultierenden Teilkräfte F117a bis F117c sowie F119a bis F119c Komponenten in verschiedenen Richtungen (Fig. 3b und Tabelle 3).

**Tabelle 3**

Kraft-Komponenten 6-Spulen-System

Kraft F117a enthält Komponenten in +x und+y und +z Richtung
Kraft F117b enthält Komponenten in -x und+y und +z Richtung
Kraft F117c enthält Komponenten in     -y und +z Richtung
Kraft F119a enthält Komponenten in +x und+y und -z Richtung
Kraft F119b enthält Komponenten in -x und+y und -z Richtung
Kraft F119c enthält Komponenten in     -y und -z Richtung

Die gewünschten Gesamtkräfte in x-, y- bzw. z-Richtung werden nun durch Addition geeigneter Spulenteilkräfte gewonnen. Dabei ist der Strom in den einzelnen Spulen nach Betrag und Richtung so zu wählen, daß als resultierende Kraft nur eine Komponente in der gewünschten Richtung auftritt und die Komponenten in den anderen Richtungen sich zu Null ergänzen.

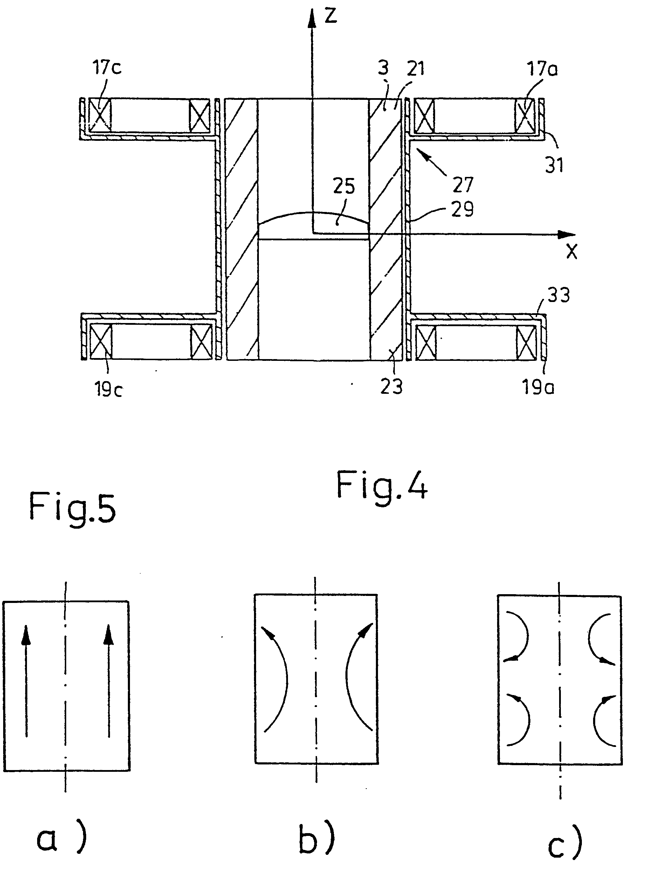

Fig. 4 zeigt einen Schnitt durch die optische Vorrichtung mit der axial magnetisierten dauermagnetischen Hülse 3, der in die Hülse fest eingesetzten Optik 25 und den Spulen 17 und 19 im Bereich der axialen Hülsenenden 21, 23. Bei einem derartigen Aufbau, wie auch aus Fig. 2 bzw. Fig. 3 zu ersehen ist, sind zur Verstellung der dauermagnetischen Hülse 3 acht bzw. sechs Spulen vorgesehen, die alle gemeinsam auf die dauermagnetische Hülse 3 einwirken. Es gibt also acht bzw. sechs Aktuatorspulen und dazu nur einen Aktuatormagneten. Dieser Aufbau ist außerordentlich einfach. Die Halterung der Spulen erfolgt in einem Spulenkörper 27, in dessen hohlem Kernrohr 29 die dauermagnetische Hülse 3 verstellbar ist. Die Spulen 17 und 19 bzw. 117 und 119 sind in den radialen Flanschen 31 und 33 des Spulenkörpers 27 vorgesehen. Die Spulen 17 und 19 sind bei dieser Anordnung reine Luftspulen.

Fig. 5a bis c zeigen Beispiele für verschiedene Magnetisierungen der Hülse. Im einzelnen zeigen:
Fig. 5a eine axial homogen magnetisierte Hülse,
Fig. 5b eine inhomogen magnetisierte Hülse mit ringförmig lateral auf dem Umfang angeordneten ringförmigen Polen (N = 2),
Fig. 5c eine ringförmig lateral auf dem Umfang magnetisierte Hülse mit ringförmigen Polen (N = 3).

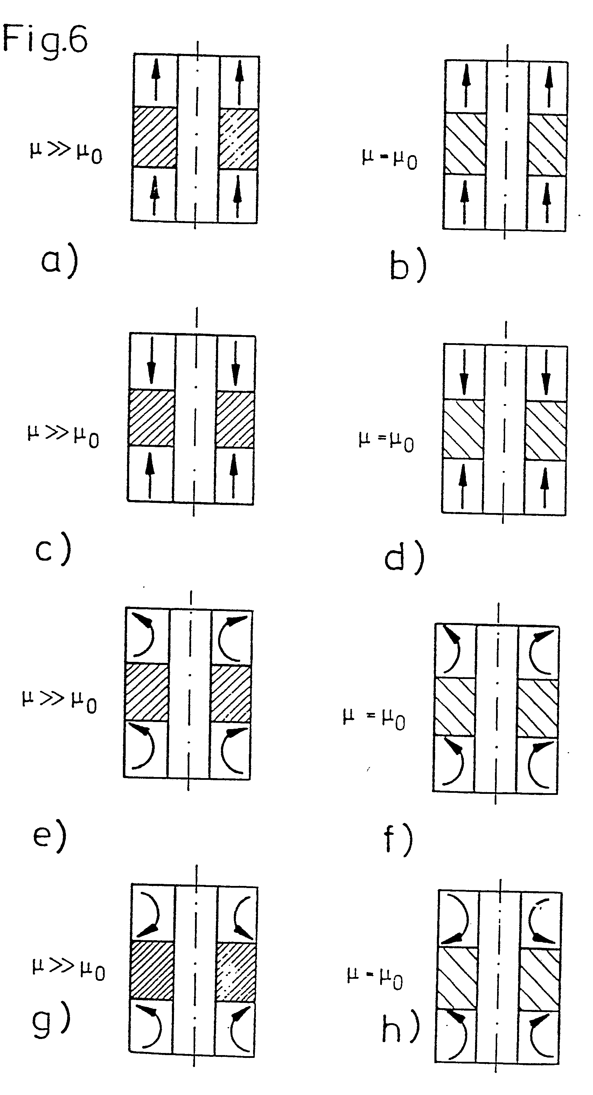

Fig. 6 zeigt Beispiele für eine Anordnung, bei der die Hülse aus zwei Magneten mit verschiedener Magnetisierung und einem Zwischenstück aus magnetisch leitendem oder magnetisch nicht-leitendem Material besteht. Im einzelnen zeigen:

Fig. 6a Magnete axial magnetisiert und gleichgerichtet, Hülse magnetisch leitend,
Fig. 6b Magnete axial magnetisiert und gleichgerichtet, Hülse magnetisch nicht-leitend,
Fig. 6c Magnete axial magnetisiert und gegeneinander gerichtet, Hülse magnetisch leitend,
Fig. 6d Magnete axial magnetisiert und gegeneinander gerichtet, Hülse magnetisch nicht-leitend,
Fig. 6e Magnete lateral magnetisiert und gleichgerichtet, Hülse magnetisch leitend,
Fig. 6f Magnete lateral magnetisiert und gleichgerichtet, Hülse magnetisch nicht-leitend,
Fig. 6g Magnete lateral magnetisiert und gegeneinander gerichtet, Hülse magnetisch nicht-leitend,

EP 0 103 929 B1

Fig. 6h Magnete lateral magnetisiert und gegeneinander gerichtet, Hülse magnetisch nicht-leitend.

**Patentansprüche**

1. Optische Vorrichtung zur Lenkung bzw. Ausrichtung eines Strahlenbündels auf Aufzeichnungs- und Wiedergabespuren in einem Informationsträger mit einem Objektiv, dessen räumliche Stellung gegenüber dem Informationsträger ständig korrigierbar ist mittels einer Bewegungsvorrichtung, die aus einem verstellbaren, in einem Magnetfeld reaktionsfähigen Objektivträger und stationären Spulen besteht, die durch elektrische Ansteuerung den Objektivträger im Magnetfeld verstellen, daß der Objektivträger aus einer Hülse (3) besteht, die mit Magnetpolen versehen ist, daß an jedem axialen Hülsenende ein Spulensatz (17, 117, 19, 119) mit jeweils mindestens drei Spulen angeordnet ist, und daß die Richtungen der Kräfte an deren Angriffspunkten an der axialen Hülse durch Positionierung der Spulen im äußeren Rückschlußfeld so gewählt werden, daß die Verlängerung der Kraftvektoren nicht durch den Schwerpunkt des Objektivträgers mit Hülse gehen und somit zwei Drehmomente um zwei zur Objektivachse (z) senkrechten Achsen (x, y) erzeugt werden, *dadurch gekennzeichnet*, daß die Spulen als Luftspulen ausgebildet sind und im äußeren Rückschlußfeldbereich der dauermagnetischen Hülse mit axialer und radialer Feldkomponente derart angeordnet sind, daß jede einzelne Spule für sich eine Kraft mit allen drei Komponenten in x-, y- und z-Richtung auf die Hülse ausübt und wobei die resultierende Kraft aller Spulen durch geeignete Ansteuerung der Spulen nur gewünschte Komponenten enthält.

2. Optische Vorrichtung nach Anspruch 1, *dadurch gekennzeichnet*, daß je vier Spulen (17, 19, 117, 119) in radialen Ebenen im Bereich der Hülsenenden (21, 23) außerhalb der Hülse (3) angeordnet sind.

3. Optische Vorrichtung nach den Ansprüchen 1 und 2, *dadurch gekennzeichnet*, daß die Hülse (3) schwimmend im hohlen Kernrohr (29) eines Spulenkörpers (21) gelagert ist.

4. Optische Vorrichtung nach den Ansprüchen 1 und 2, *dadurch gekennzeichnet*, daß die Spulen als Formspulen ausgebildet sind, wobei ihre Form dem 3-dimensionalen Verlauf des Permanentmagnetfeldes angepaßt ist in der Weise, daß die Lorentzkraft möglichst groß ist.

5. Optische Vorrichtung nach einem oder mehreren der Ansprüche 1 bis 4, *dadurch gekennzeichnet*, daß die permanentmagnetische Hülse einen polygonförmigen Querschnitt hat (z. B. Quadrat) und die zugehörigen Spulen der polygonförmigen Hülse angepaßt sind.

6. Optische Vorrichtung nach einem oder mehreren der Ansprüche 1 bis 5, *dadurch gekennzeichnet*, daß die Hülse (3) mit einer inhomogenen Magnetisierung versehen ist.

7. Optische Vorrichtung nach einem oder mehreren der Ansprüche 1 bis 6, *dadurch gekennzeichnet*, daß die Magnetpole der axial magnetisierten Hülse (3) an deren Stirnflächen (21, 23) vorgesehen sind.

8. Optische Vorrichtung nach einem oder mehreren der Ansprüche 1 bis 4, *dadurch gekennzeichnet*, daß die Spulen in einer zylinderförmigen Ebene über der Hülsenmantelfläche angeordnet werden und die Spulenrückseiten in einem Feldgebiet mit möglichst geringer Feldintensität angeordnet sind.

9. Optische Vorrichtung nach einem oder mehreren der Ansprüche 1 bis 8, *dadurch gekennzeichnet*, daß die Hülse in axialer Richtung aus mehreren Teilen besteht.

10. Optische Vorrichtung nach Anspruch 9, *dadurch gekennzeichnet*, daß zwei kurze Dauermagnete über ein magnetisch leitendes Zwischenstück miteinander verbunden sind.

11. Optische Vorrichtung nach Anspruch 9, *dadurch gekennzeichnet*, daß das Zwischenstück magnetisch nicht leitfähig ist.

**Claims**

1. An optical device for deflecting or aligning a radiation beam relative to recording and reproduction tracks in an information carrier by means of an objective whose geometrical position relative to the information carrier can be corrected continually by means of an actuating device, comprising a movable objective support, which is responsive in a magnetic field, and stationary coils, which move the objective support in the magnetic field by electrical energization, the objective support comprising a sleeve (3) provided with magnet poles, a coil set (17, 117, 19, 119) comprising at least three coils being arranged at each axial coil end, the directions of the forces at the points where they act on the axial sleeve being selected by positioning the coils in the external return field in such a way that the extensions of the force vectors do not pass through the centre of gravity of the objective support with the sleeve and thus two torques about two axes (x, y) perpendicular to the objective axis (z) are produced, *characterized in that* the coils are constructed as

6

air-core coils and are arranged in the external return field area of the permanent-magnet sleeve with axial and radial components in such a way that each individual coil subjects the coil to a force with all the three components in the x, y and z-directions, the resultant force of all the coils upon appropriate energization of the coils comprising only desired components.

2. An optical device as claimed in Claim 1, *characterized in that* four coils (17, 19, 117, 119) are arranged outside the sleeve (3) in radial planes at the location of the sleeve ends (21, 23).

3. An optical device as claimed in Claims 1 and 2, *characterized in that* the sleeve is freely suspended in the hollow tubular core (29) of a coil former (21).

4. An optical device as claimed in Claims 1 and 2, *characterized in that* the coils are constructed as coil preforms, their shape being adapted to the 3-dimensional shape of the permanent-magnet field in such a way that the Lorentz force is maximal.

5. An optical device as claimed in any one or several of the Claims 1 to 4, *characterized in that* the permanent-magnet sleeve is of polygonal (for example square) cross-section and the associated coils are adapted to the polygonal sleeve.

6. An optical device as claimed in any one or several of the Claims 1 to 5, *characterized in that* the sleeve (3) is magnetized non-homogeneously.

7. An optical device as claimed in any one or several of the Claims 1 to 6, *characterized in that* the magnet poles of the axially magnetized sleeve (3) are situated at its end faces (21, 23).

8. An optical device as claimed in any one or several of the Claims 1 to 4, *characterized in that* the coils are arranged in a cylindrical configuration around the circumferential sleeve surface and the backs of the coils are arranged in a field area where the field strength is minimal.

9. An optical device as claimed in any one or several of the Claims 1 to 8, *characterized in that* the sleeve comprises a plurality of axial parts.

10. An optical device as claimed in Claim 9, *characterized in that* two short permanent magnets are interconnected by a magnetically conductive intermediate part.

11. An optical device as claimed in Claim 9, *characterized in that* the intermediate part is magnetically non-conductive.

**Revendications**

1. Dispositif optique pour le guidage et l'alignement d'un faisceau de radiation sur des pistes d'enregistrement et de reproduction sur un support d'information, comprenant un objectif dont la position spatiale par rapport au support d'information est en permanence susceptible de correction au moyen d'un dispositif de déplacement qui consiste en un porte-objectif réglable réactif dans un champ magnétique et en des bobines stationnaires, qui déplacent le porte-objectif dans le champ magnétique par excitation électrique, dans lequel le porte-objectif consiste en une douille (3) qui est munie de pôles magnétiques, un jeu de bobines (17, 117, 19, 119) comprenant au moins trois bobines est agencé à chaque extrémité axiale de la douille et les directions des forces à leur point d'application sur la douille axiale sont choisies par positionnement des bobines dans le champ extérieur de retour de façon que les prolongements des vecteurs de force ne passent pas par le centre de gravité du porte-objectif avec douille et qu'ainsi deux couples de forces soient exercés autour de deux axes (x, y) perpendiculaires à l'axe (z) de l'objectif, caractérisé en ce que les bobines sont des bobines sans fer et sont agencées dans la région du champ extérieur de retour de la douille à aimantation permanente avec des composantes de champ axiales et radiales, de façon que chaque bobine particulière exerce sur la douille une force comprenant les trois composantes dans les directions x, y et z, et que la force résultante de toutes les bobines ne comprenne que les composantes souhaitées suite à une excitation judicieuse des bobines.

2. Dispositif optique suivant la revendication 1, caractérisé en ce que quatre bobines (17, 19, 117, 119) sont agencées à l'extérieur de la douille (3) dans des plans radiaux dans la région de chaque extrémité de la douille (21, 23).

3. Dispositif optique suivant les revendications 1 et 2, caractérisé en ce que la douille (3) est montée flottante dans le tube central creux (29) d'un corps de bobine (21).

4. Dispositif optique suivant les revendications 1 et 2, caractérisé en ce que les bobines sont des bobines façonnées sur gabarit, dont la forme est adaptée à la conformation tridimensionnelle du champ magnétique permanent de façon que la force de Lorentz soit aussi grande que possible.

5. Dispositif optique suivant une ou plusieurs des revendications 1 à 4, caractérisé en ce que la douille à aimantation permanente présente une section polygonale (par exemple carrée) et les bobines afférentes sont adaptées à la douille polygonale.

6. Dispositif optique suivant une ou plusieurs des revendications 1 à 5, caractérisé en ce que la douille (3) est dotée d'une magnétisation inhomogène.

7. Dispositif optique suivant une ou plusieurs des revendications 1 à 6, caractérisé en ce que les pôles magnétiques de la douille (3) magnétisée axialement sont prévus aux faces d'about (21, 23) de celle-ci.

8. Dispositif optique suivant une ou plusieurs des revendications 1 à 4, caractérisé en ce que les bobines sont agencées dans un plan cylindrique autour de la surface enveloppe de la douille et les envers des bobines sont agencés dans un domaine du champ où l'intensité de champ est la plus faible possible.

9. Dispositif magnétique suivant une ou plusieurs des revendications 1 à 8, caractérisé en ce que la douille consiste en plusieurs parties dans le sens axial.

10. Dispositif optique suivant la revendication 9, caractérisé en ce que deux aimants permanents courts sont reliés entre eux par une pièce intermédiaire conductrice du champ magnétique.

11. Dispositif optique suivant la revendication 9, caractérisé en ce que la pièce intermédiaire n'est pas conductrice du champ magnétique.

Fig.1

EP 0 103 929 B1

Fig 2a

Fig.2b

EP 0 103 929 B1

Fig.3a

EP 0 103 929 B1

Fig.4

Fig.5

a )        b)        c)

Fig.6

$\mu \gg \mu_0$

a)

$\mu - \mu_0$

b)

$\mu \gg \mu_0$

c)

$\mu = \mu_0$

d)

$\mu \gg \mu_0$

e)

$\mu = \mu_0$

f)

$\mu \gg \mu_0$

g)

$\mu - \mu_0$

h)